# EUROPEAN PATENT SPECIFICATION

(11) **EP 0 851 645 B1**
(45) Date of publication and mention of the grant of the patent: **09.03.2005**
(21) Application number: 96203669.5
(22) Date of filing: 23.12.1996
(51) Int. Cl.: H04M 1/57

(54) **Communication system with caller identification transmission**
Kommunikationssystem mit Übertragung der Anruferidentifizierung
Système de communication avec transmission de l'identité de l'appelant

(43) Date of publication of application: 01.07.1998
(73) Proprietor: Koninklijke KPN N.V., 9726 AE Groningen (NL)
(72) Inventor: Pieterse, Rob, 2264 XZ Leidschendam (NL)
(74) Representative: Wuyts, Koenraad Maria

(56) References cited:
- WO-A-96/14702
- DE-A- 3 920 721
- US-A- 5 394 445
- US-A- 5 546 448
- COMMUTATION ET TRANSMISSION, vol. 17, no. 1, 1 January 1995, pages 77-84, XP000490030 MARTI ET AL: "CALLING LINE IDENTIFICATION AND THE TELEPHONE"

## Description

The present invention relates to a communication system comprising a communication network and at least a user station coupled thereto, the communication network being arranged for sending calling line identification (CLI) messages in a specified type of data format to the user station, comprising calling line identification information of a calling line, the user station comprising receiver means to receive the messages in the specified type of data format and further comprising a clock. Calling line identification (CLI), also known as calling number indication (CNI) or calling line identification and presentation (CLIP), is a service which is now offered by many telephone companies, especially in North America. The service involves the sending by the communication network, in conjunction with a call alert (ring) signal, of data identifying the party calling a user station. The called party may then, when provided with a suitable telephone set or CLI unit, read the originating number of the incoming call from a display before answering the call, i.e. during call set-up. Some dedicated telephone sets even contain a list of frequently called (or calling) numbers with the corresponding names, thus allowing a name to be shown in the display of the set when a call of a known party comes in at a certain time. The calling line identification data may of course also be used in further user equipment coupled to the user station, like answering machines.

Different telephone administrations have adopted different data formats and/or different signalling protocols with respect to calling line identification. Some of the data formats, as those used in the United States comprise data fields for the number of the caller line and also for the time at which the call takes place. By use of this information further user equipment coupled to the user station, as for example answering machines may give as well the number of a caller. leaving a message as the time of the call. This is, e.g., the case in US patent 5,394,445. This time information may be of great importance to a called party, because this enables him to judge the relevancy and the status of the messages left on his answering machine. Many callers forget to mention the date and the time of their call when leaving a message. Some of the European countries, amongst others Sweden and the Netherlands have adopted a simpler data format for CLI than the one used in the United States, in which only the number of the caller line is sent. In these countries a user can only obtain besides CLI-information time information about a certain call when his user station is provided with a high precision clock. Such a high precision clock is expensive. Furthermore the user station must be provided with a user interface for setting the time of the clock manually, before or when the user station is connected to the communication network for the first time. This manual setting is time consuming and annoying for the user.

In the system according to US patent 5,394,445, mentioned earlier, the CLI-information is used for synchronisation of the clock/calender 46.

It is an object of the present invention to adapt a communication system having a simple data format for CLI messages as used amongst others in the Netherlands and Sweden, in such a way, that the user stations are provided with time information in a cheap and simple manner.

Thereto the communication system according to the present invention is characterized in that, the communication network further is arranged for sending synchronizing messages (SYNC) in the specified type of data format to the user station comprising time information and in that the user station further comprises synchronizing means for synchronizing the clock in dependence on the synchronizing messages sent by the communication network. Time information is defined to be information about date and time. By using the same type of data format for the synchronizing messages as for the calling line identification messages, i.e. having the same syntax, the receiver means of the user station does not need to be adapted for receiving the synchronizing messages. The user station only needs to be arranged for recognizing if an incoming message is a calling line identification message or a synchronization message. The clock may be kept rather inaccurate and cheap, because it is synchronized every once in a while using the synchronizing messages of the communication network, which are to be generated by means of a high precision clock. The synchronizing messages may be sent to the user station periodically for example at night, when there is little telephone traffic and therefore sending the messages is not disturbing. Also other procedures may be adopted. For example the communication network may be provided with a toll free number to which user stations coupled to the network may direct requests for messages comprising time information. The communication network upon receiving such a request starts a call back procedure calling the requesting user station and providing it with the requested time information. The user station may even be arranged to automatically request receiving a synchronizing message from the communication network, when it is connected thereto for the first time, the synchronizing message being used as starting value for the clock. In this way it is not necessary for the user to set the clock, manually and therefore the user station does not need to be provided with a user interface for manual clock setting, either. A still further procedure is to send the synchronizing messages in conjunction with incoming calls, if there are no CLI-messages present. This may be the case if an incoming call originates from another communication network, which does not support CLI or when a calling party does not wish the CLI to be sent. Finally, the communication network may be arranged for integrating the calling line identification messages and synchronization messages into single messages, using a hexadecimal representation for the calling line identification information while putting time information in positions, which have become empty by the use of the hexadecimal representation. A hexadecimal representation of the CLI messages is well possible using DTMF tones, because sixteen characters are defined. A hexadecimal representation occupies fewer message positions than a corresponding decimal representation and therefore leaves room, which can be used for sending also time information in the same message.

The present invention relates to a communication network and a user station.

The invention will further be explained with reference to the accompanying drawings in which:
Figure 1 schematically shows a communication system according to the present invention,
Figure 2 schematically shows a first embodiment of a user station for use in the communication system according to the present invention,
Figure 3 schematically shows a second embodiment of a user station for use in the communication system according to the present invention,
Figure 4 shows the calling line identification message according to the specified data format and a message comprising calling line identification according to another data format as converted in the first embodiment of the user station,
Figure 5 shows an example of calling line identification message and a synchronization message in the specified data format,
Figure 6 shows a state diagram representing the control states of the user station according to figure 2,
Figure 7 shows a state diagram representing the control states of the user station according to figure 3,
Figure 8 shows an advantageous housing for the converter device of the user station according to figure 2.

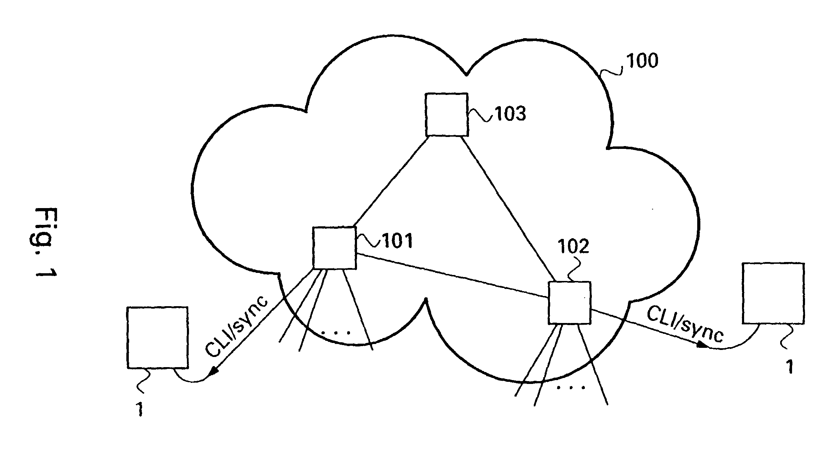

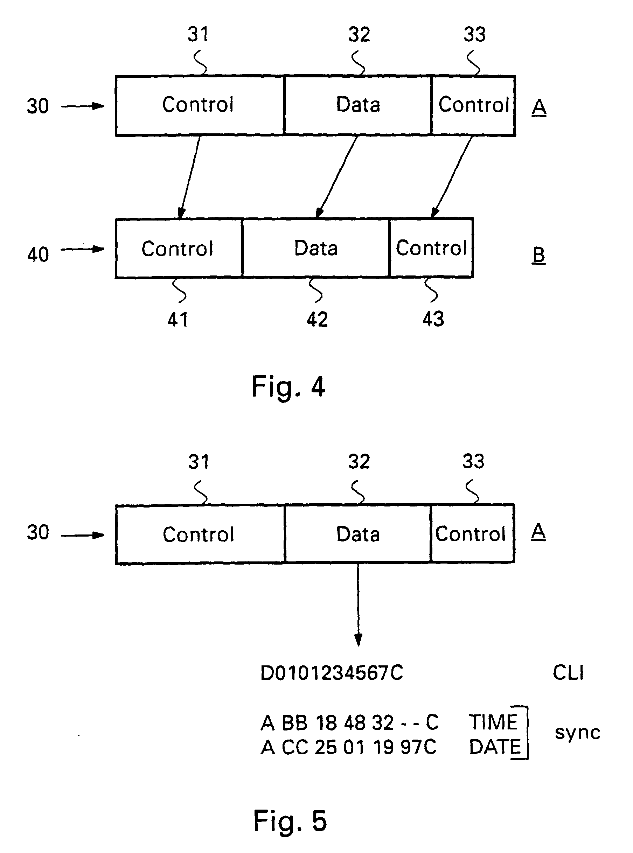

The communication system according to the invention as shown schematically in figure 1 comprises a communication network 100 and user stations 1 coupled thereto. For reasons of simplicity only two user stations are shown but it should be understood that normally many more of them are present. The communication network is for example a Public Switched Telephone Network (PSTN). Such a PSTN comprises a number of exchanges, such as local exchanges, main exchanges and dedicated exchanges for value added services. In figure 1 by way of example two local exchanges 101,102 and one exchange for value added services 103 are shown. Other exchanges known as such may however be present. The communication network 100 is arranged to send a message CLI comprising caller line identification information to the user stations. In European countries amongst others in the Netherlands and Sweden, the message is sent by way of Dual Tone Multiple Frequency (DTMF) signals before the first ringer signal is sent. The data format A of this message is shown in the upper part of figure 4. The message 30 is constituted by first control signals 31, data signals 32 and second control signals 33. The data signals 32 contain the actual CLI information, i.e. the number of the calling line. The control signals 31 according to the standard adopted in the Netherlands comprise a DTMF code "D", while the control signals 33 is indicated by a DTMF code "C", as shown in figure 5. Between these two characters the number of the calling line is present, in this case 010 1234567. The codes used in control signals 31 and 33 and the length of the data signal field 32 may vary from country to country. The description of the situation in the Netherlands is meant in a purely illustrative way. The control signals 31 may begin with a polarity change of the wires of the telephone line to which the user station is coupled. Similarly, the control signals 33 may also comprise a polarity change to indicate the end of the control sequence. Other control signals may be e.g. ringing signals. Changes in the AC or DC resistance may also be considered to constitute control signals, the actual use and constitution of the control parts 31 and 33 of the message 30 being determined by the signalling protocols employed by the telecommunications company in question. Due to the fact, that relatively slow DTMF signals are used, which are sent to the user station before the first ringing signal, the message 30 may not comprise many data, because it otherwise would last to long. Therefore according to the Dutch and Swedish standards the message 30 only comprises 10 data positions. Other standards as used in for example in the United States use Frequency Shift Keying (FSK) signals, which are sent to the user station between the first and second ring signal. Because the reachable data rate of FSK-signals is much higher than that of DTMF signals the messages sent to the user stations may be made much longer than those in the Netherlands and Sweden. Therefore another second data format B is used, as shown in the lower part of figure 4. A message 40 of this second format B comprises CLI signals and the time. The message 40 is constituted by first control signals 41, data signals 42 and second control signals 43. The data signals 42 contain the actual CLI information, i.e. the number of the calling line, the present time and optionally also the name of the caller. The first control part 41 of the message 40 is constituted by a message header comprising a message type field and a message length field. These fields, as the actual message fields constituting the data part 41, are digitally represented by frequency shift keying, a 1200 Hz signal representing a "mark" (logical 1) and a 2200 Hz signal representing a "space" (logical 0). The message type field and message length fields are preceded by a channel seizure signal (a sequence of logical ones and zeros during 250 ms) and a conditioning signal (a sequence of logical ones during 150 ms). It should be noted that in the US format, the second control part 43 comprises a checksum of one word (8 bits).

The communication network 100 is arranged to send synchronizing messages SYNC to the user stations 1. These synchronizing messages have the same data format A as the CLI message. They are also sent by way of DTMF signals. They may be sent to the user stations by the local exchanges, periodically, e.g. once a week at night, when little telephone traffic is present. Another possibility is that the user dials a special number for value added services indicating a request for receiving a SYNC message. The value added service exchange then adopts a call back procedure calling back the requesting station and sending the SYNC-message by way of DTMF signals. The user station may even be arranged to automatically request receiving a synchronizing message from the communication network, when it is connected thereto for the first time, the synchronizing message being used as starting value for the clock. In this way it is not necessary for the user to set the clock, manually and therefore the user station does not need to be provided with a user interface for manual clock setting, either. The data field 32 of the synchronizing message comprises the present time instead of the calling line identification. In order to make it possible for the user station to distinguish between synchronizing messages and calling line identification messages the character in the control field 31 of the synchronizing messages must be made different from the control data of the CLI message. For example an "A" (as shown in figure 5) or a "B" may be used instead of a "D". The character in the control field 33 may be kept the same i.e. a "C". The data field 32 between these two characters comprises information about the date and time. For example a message may be sent, which comprises the last two figures of the number of the year, the number of the month, the number of the day and the time in hours and minutes. Given the length of the data field 32 (10 positions), there is no room for the seconds, then. If no high precision synchronization is needed, it is of course not necessary to include the seconds in the synchronization message. If high precision synchronization is wanted, use can be made of two types of synchronization messages one relating to the date and one relating to the time, as shown in figure 5. The synchronization message then should be provided with data indicating of which type it is. By way of example in figure 5 one message relating to the time (TIME) is shown and one message relating to the date (DATE). The first one comprises data indicating that it is a message relating to the time (BB, by way of example) and the actual time in hours (18), minutes (48) and seconds (32). The last two message positions may be left empty. The second one comprises data indicating that it is a message relating to the date (CC, by way of example) and the date represented by the number of day (25), the number of month (01) and the year 1997. The communication network may be arranged to send the two types of messages, alternately.

In a further embodiment the communication network is arranged for integrating the calling line identification messages and synchronization messages into single messages, using a hexadecimal representation for the calling line identification information while putting time information in positions, which have become empty by the use of the hexadecimal representation. A hexadecimal representation of the CLI messages is well possible using DTMF tones, because sixteen characters are defined. A hexadecimal representation occupies fewer message positions than a corresponding decimal representation and therefore leaves room for sending also time information in the same message. Since the room for sending the time information only consists of a few positions, it is impossible to send time information about year, month, day, hours and minutes in a single message. Therefore only one of these parameters should be sent per message. In this way each message is used to synchronize one the parameters (year, month, day, hours or minutes) of the clock. A position of the data field 32 is then to be used to indicate to which parameter the time information relates.

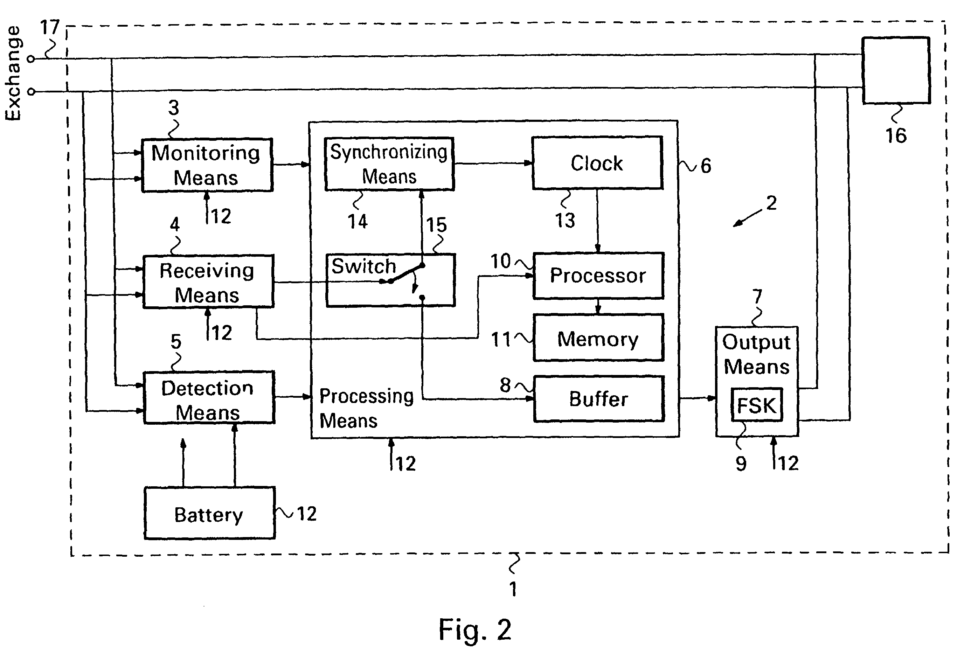

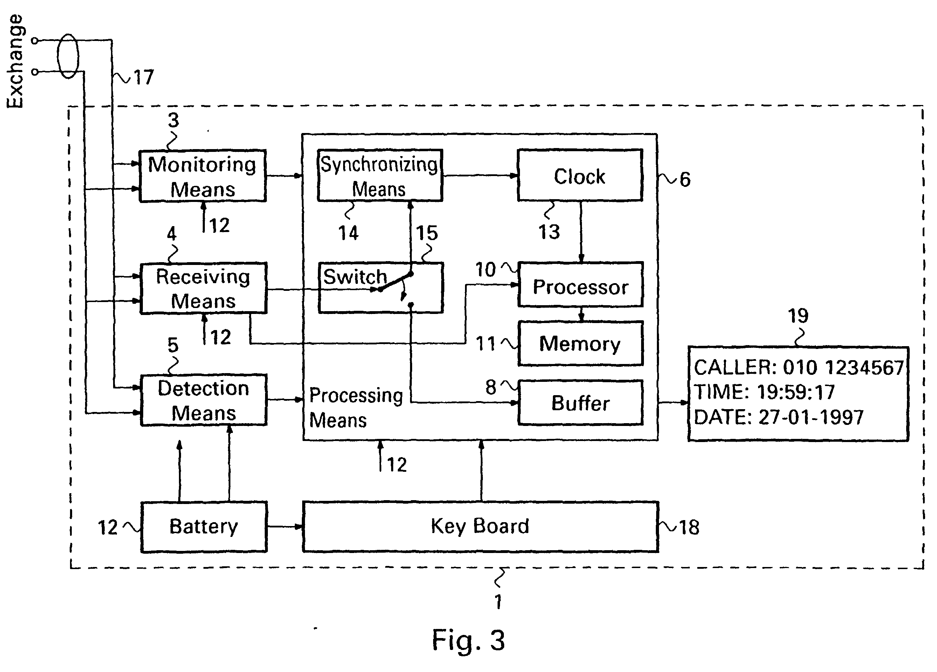

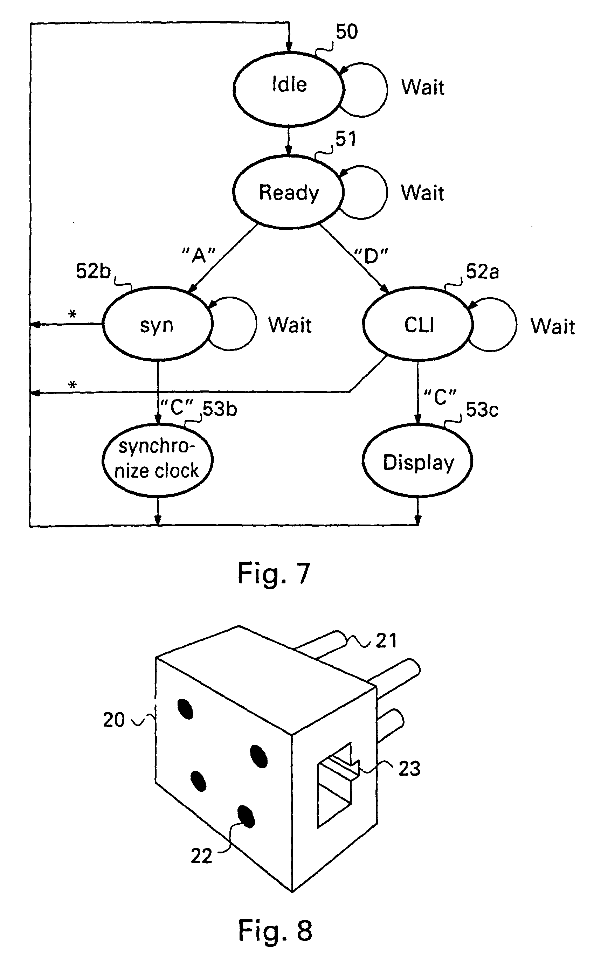

In figure 2 and 3 two embodiments of a user station for use with the present invention are shown. In the first embodiment shown in figure 2 the incoming CLI message in the format A (European format) is converted to the second format B (US-format) by a converter 2, as described in applicant's copending not prepublished European patent application No. 96202245.5. In this way a widely available standard US CLI telephone set 16 may be used, in conjunction with the converter 2. This makes it unnecessary to use dedicated CLI-telephones for relatively small markets as the Netherlands or Sweden. The converter 2 is kept small and cheap. It may be produced in a special small housing as shown in figure 8. So, in the embodiment according to figure 2 the user station 1 (indicated by a dashed line) consists of two separate devices, converter 2 and US-standard CLI-telephone 16.

The user station 1 comprises monitoring means 3 for monitoring the telecommunications line 17, receiving means 4 for receiving calling line identification data and synchronizing data, detection means 5 for detecting an incoming call, processing means 6 for processing the received calling line identification messages (i.e. CLI data and one or more control sequences) and the received synchronization messages and for converting the CLI messages from format A to format B and output means 7 for outputting the converted signals.

The monitoring means 3, the receiving means 4 and the detection means 5 are connected in parallel to both the two-wire line 17 and to the processing means 6. The output means 7 are connected to the processing means 6 and the line 17. The line monitoring means 3 are arranged for monitoring the polarity of the line 17. A change in polarity of the wires of line 17 indicates in some telephone systems an incoming call.

The receiving means 4 are arranged for receiving DTMF signals and for putting these signals into digital form. The detection means 5 are arranged for detecting a ring signal. The processing means 6 may comprise a microprocessor 10 and a memory 11. Alternatively, a so-called finite state machine may be implemented by means of a e.g. PLA (Programmable Logic Array). The processing means 6 may also comprise a buffer 8 for buffering data contained in the CLI message (30 in Fig. 4). The processing means further comprises a clock 13, synchronizing means 14 and a controlled switch 15. If the receiving means receive a character in the control field 31 "D" corresponding to a CLI message, the data is switched to buffer 8. If the receiving means receive a character corresponding to a synchronizing message, in the present embodiment an "A", the data is switched to the synchronizing means 14, which use this message to synchronize clock 13.
When a CLI message comes in the CLI data and also the time and date of the clock 13 at the arrival of the CLI message are converted into data format B. The output means 7 comprise a frequency generator 9 for producing FSK (Frequency Shift Keying) signals in response to data provided by the processing means 6.

The device 1 may comprise a power source 12, such as a (removable) battery, for powering the electronic components. Advantageously, however, the device 1 is powered by the line 17, a capacitor being provided as energy buffer to bridge interruptions in the line voltage.

Instead of using a converter 2 to convert the messages into data format B, also a dedicated telephone set adapted to data format A may be used, as shown in figure 3. The dedicated telephone set besides the elements, already shown in figure 2 comprises a keyboard 18, a display 19 and also the usual well known telephone elements as a ringer, dial circuits etc., (not shown). When a CLI message comes in, the processing means sends the CLI data as well as the time and date of the clock at the arrival of the CLI message to the display 19. so, in this second embodiment no conversion from format A to format B is made. Of course further equipment suitable for CLI such as an answering machine may be coupled to both embodiments of the user station.

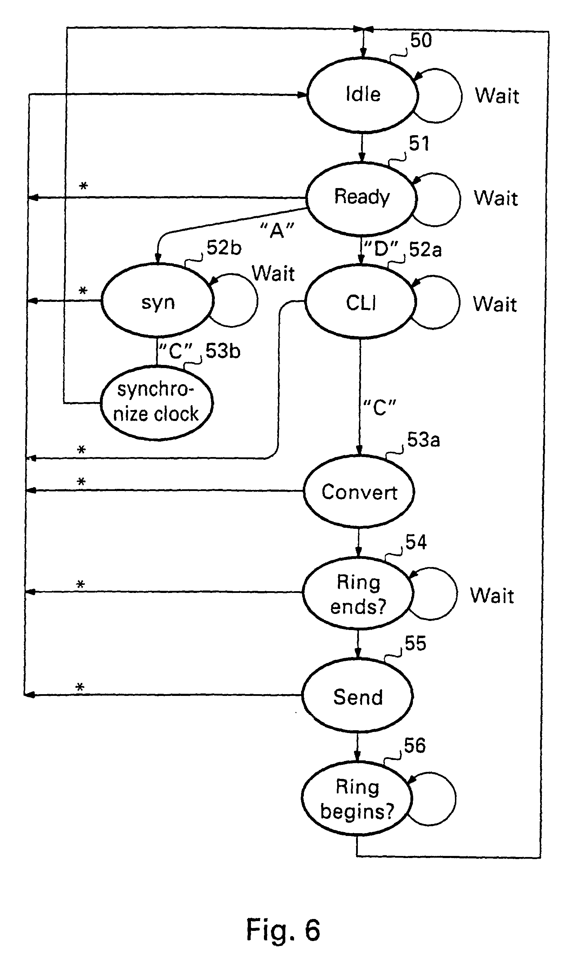

The state diagram shown in figure 6 represents the control of the processing unit in the first embodiment of the device 1, specifically in case CLI signals are converted from the Dutch or Swedish format (A) to the US format (B).

Control starts with an idle state 50. In this idle state, it is checked whether the line monitoring means 3 detect a change in the line, e.g. a polarity change, indicating an incoming call. As long as the line monitoring means detect no change, control remains in idle state 50. When a change (i.e. of polarity) occurs, control assumes a subsequent state, i.e. ready state 51.

In ready state 51, the device is ready to receive data, e.g. suitable DTMF signals, in the format A. The device waits in this state until the character of control field 31 occurs. If this character corresponds to a CLI message (in this embodiment a "D"), the device goes to state 52a. In state 52a the CLI data contained in the DTMF (Dual Tone Multiple Frequency) signals are stored in the buffer 8. Control remains in state 52a as long as no DTMF "C" signal occurs. The check for a DTMF "C" signal may be made by the processing means 6 in response to signals produced by the DTMF receiver (receiving means) 4.

In convert state 53a, the contents of the buffer 8 are converted from the format A into format B and stored again in buffer 8. Also the current time of clock 13 is stored in buffer 8. Furthermore the converted control sequences 31 and 33 (as shown in Fig. 2) may be stored, as control sequences 41 and 43, in buffer 8.

If the character in the control field 31 corresponds to a synchronizing message (in this embodiment an "A") the device goes from state 51 to state 52b. In state 52b the synchronizing message is read by the synchronizing means 14. As soon as the character of the control field 33 "C" occurs, the device goes to synchronizing state 53b, in which the clock is synchronized by the synchronizing means. After state 53b, the device goes back to idle state 50.

State 54 is a wait state which is maintained as long as the ringing (as detected by detection means 5) does not stop. As soon as the ringing stops, control assumes the next state, i.e. state 55.

In state 55 the control sequence 41 (in Fig. 2), the (converted) contents of buffer 8 (data 42 in Fig. 2), and the control sequence 43 (in Fig. 2) are sent to the line 17, i.e. converter 2 sends the CLI message between the first and second ring to the telephone set 16, as prescribed by the US-standard. Control subsequently assumes state 56, in which is waited for ringing to commence. Control subsequently returns to idle state 50.

It should be noted that control may return from each state to idle state 50 when a polarity change (in general: a line change as detected by the monitoring means 3) occurs. This return path is indicated in Fig. 6 by an asterisk (*).

The state diagram shown in figure 7 represents the control of the processing unit in the second embodiment of the device 1, in which no data format conversion takes place. States 50, 51, 52a, 52b and 53b are the same as in figure 6. In state 53c the number of the calling line and the current time of clock 13 are sent to display 19. States 54, 55 and 56 are not present in the second embodiment.

The user station 1 may be arranged to automatically request receiving a synchronizing message from the value added service exchange, when it is connected to the communication network for the first time. This synchronizing message is than used as starting value for clock 13. In this way it is avoided, that the user must set clock 13 manually. No user interface for manual clock setting is necessary, either.

Figure 8 shows an example of a suitable housing of the converter 2, as shown in figure 2. Preferably, this device is designed so as to fit in a telecommunications wall outlet. The housing 20 comprises pins 21 (plug) for insertion into a (European) wall socket. The housing 20 further comprises a corresponding female connector (socket) 22, as well as a US-style female plug 23 (type RJ12) for connecting a telephone set. All the electronic parts and connections of converter 2, as shown in figure 2, are contained in the housing 20. The particular plug-in housing 20 of figure 8 is easy to use and inexpensive.

It will be understood by those skilled in the art, that the embodiment described above is given by way of example only and that many modifications and additions are possible without departing from the scope of the present invention.

## Claims

1. Communication network (100) being arranged for sending messages in a specified type of data format to at least a user station (1) coupled thereto, the messages comprising calling line identification information of a calling line, the user station (1) comprising receiver means (4) to receive the messages in the specified type of data format and further comprising a clock (13), **characterized in that** the communication network (100) is arranged for sending to the user station (1) synchronizing (SYNC) messages in the specified type of data format comprising time information and no calling line identification information, only to be used to synchronize the clock (13) present in the user station (1).

2. Communication network (100) according to claim 1, **characterized in that** the communication network (100) is arranged for sending the synchronizing messages periodically to the user station (1).

3. Communication network (100) according to claim 1 or 2, **characterized in that** the communication network (100) is arranged for sending the synchronizing messages to the user station (1) in response on a request thereto.

4. Communication network (100) according to claim 1 through 3, **characterized in that** the communication network (100) is arranged for sending the synchronizing messages to the user station (1) in conjunction with incoming calls, if there are no calling line identification messages present.

5. Communication network (100) according to claim 1, **characterized in that** the communication network (100) is arranged for integrating the calling line identification messages and synchronization messages into single messages, using a hexadecimal representation for the calling line identification information while putting time information in positions, which have become empty by the use of the hexadecimal representation.

6. User station (1) to be coupled to a communication network (100), comprising a receiver (4) for receiving messages in a specified type of data format comprising calling line identification information of a calling line, sent to it by the communication network (100) and further comprising a clock (13), **characterized in that** the user station (1) further comprises synchronizing means (14) for synchronizing the clock (13) in dependence of synchronizing messages in the specified type of data format sent by the communication network (100), comprising time information and no calling line identification information.

7. User station (1) according to claim 6, **characterized in that** the user station (1) is arranged to automatically request to receive a synchronizing message from the communication network (100), when it is connected thereto for the first time, the synchronizing message being used as starting value for the clock (13).

## Patentansprüche

1. Kommunikationsnetzwerk (100), welches so ausgestaltet ist, um Nachrichten in einem bestimmten Typ von Datenformat an mindestens eine mit diesem verbundene Benutzerstation (1) zu senden, wobei die Nachrichten Anrufsleitungsidentifikationsinformation einer anrufenden Leitung umfassen, wobei die Benutzerstation (1) Empfängermittel (4) umfasst, um die Nachrichten in dem bestimmten Typ von Datenformat zu empfangen, und die weiter eine Uhr (13) umfasst, **dadurch gekennzeichnet, dass** das Kommunikationsnetzwerk (100) so ausgestaltet ist, um an die Benutzerstation (1) Synchronisiernachrichten (SYNC) in dem bestimmten Typ von Datenformat zu senden, welche Zeitinformation und keine Anrufsleitungsidentifikationsinformation umfassen, welche nur dazu eingesetzt werden, um die in der Benutzerstation (1) vorhandene Uhr (13) zu synchronisieren.

2. Kommunikationsnetzwerk (100) nach Anspruch 1, **dadurch gekennzeichnet, dass** das Kommunikationsnetzwerk (100) so ausgestaltet ist, um die Synchronisiernachrichten periodisch an die Benutzerstation (1) zu senden.

3. Kommunikationsnetzwerk (100) nach Anspruch 1 oder Anspruch 2, **dadurch gekennzeichnet, dass** das Kommunikationsnetzwerk (100) so ausgestaltet ist, um die Synchronisiernachrichten an die Benutzerstation (1) in Antwort auf eine erfolgte Anfrage zu senden.

4. Kommunikationsnetzwerk (100) nach einem der Ansprüche 1 bis 3, **dadurch gekennzeichnet, dass** das Kommunikationsnetzwerk (100) so ausgestaltet ist, um die Synchronisiernachrichten an die Benutzerstation (1) in Übereinstimmung mit einlaufenden Anrufen zu senden, falls keine Anrufsleitungsidentifikationsnachrichten vorhanden sind.

5. Kommunikationsnetzwerk (100) nach Anspruch 1, **dadurch gekennzeichnet, dass** das Kommunikationsnetzwerk (100) so ausgestaltet ist, um Anrufsleitungsidentifikationsnachrichten und Synchronisiernachrichten in einzelne Nachrichten unter Einsatz einer hexadezimalen Darstellung für die Anrufsleitungsidentifikationsinformation zu integrieren, während Zeitinformation in Positionen angeordnet wird, die durch den Einsatz der hexadezimalen Darstellung leer geworden sind.

6. Benutzerstation (1), die mit einem Kommunikationsnetzwerk (100) zu verbinden ist, mit einem Empfänger (4) zum Empfangen von Nachrichten in einem bestimmten Typ von Datenformat mit Anrufsleitungsidentifikationsinformation einer anrufenden Leitung, die an sie durch das Kommunikationsnetzwerk (100) gesendet worden ist, und die weiter eine Uhr (13) umfasst, **dadurch gekennzeichnet, dass** die Benutzerstation (1) weiterhin Synchronisiermittel (14) zum Synchronisieren der Uhr (13) in Abhängigkeit von von dem Kommunikationsnetzwerk (100) übermittelten Synchronisiernachrichten in dem bestimmten Typ von Datenformat umfasst, die Zeitinformation und keine Anrufsleitungsidentifikationsinformation umfassen.

7. Benutzerstation (1) nach Anspruch 6, **dadurch gekennzeichnet, dass** die Benutzerstation (1) so ausgestaltet ist, um automatisch den Empfang einer Synchronisiernachricht von dem Kommunikationsnetzwerk (100) anzufordern, wenn sie mit diesem zum ersten Mal verbunden ist, wobei die Synchronisiernachricht als Startwert für die Uhr (13) eingesetzt wird.

## Revendications

1. Réseau de communication (100) étant disposé pour envoyer des messages dans un type spécifié de format de données à au moins une station d'utilisateur (1) couplée à celui-ci, les messages comprenant des informations d'identification de ligne d'appelant, la station d'utilisateur (1) comprenant un moyen de réception (4) pour recevoir les messages du type spécifié de format de données et comprend en outre une horloge (13), **caractérisé en ce que** le réseau de communication (100) est disposé pour envoyer à la station d'utilisateur (1) des messages de synchronisation (SYNC) dans le type spécifié de format de données comprenant des informations de temps et pas d'informations d'identification de ligne d'appelant, seulement à utiliser pour synchroniser l'horloge (13) présente dans la station d'utilisateur (1).

2. Réseau de communication (100) selon la revendication 1, **caractérisé en ce que** le réseau de communication (100) est disposé pour envoyer périodiquement les messages de synchronisation à la station d'utilisateur (1).

3. Réseau de communication (100) selon la revendication 1 ou 2, **caractérisé en ce que** le réseau de communication (100) est disposé pour envoyer les messages de synchronisation à la station d'utilisateur (1) en réponse à une demande de celle-ci.

4. Réseau de communication (100) selon les revendications 1 à 3, **caractérisé en ce que** le réseau de communication (100) est disposé pour envoyer les messages de synchronisation à la station d'utilisateur (1) en conjonction avec des appels entrants, s'il n'y a pas de messages d'identification de ligne d'appelant présents.

5. Réseau de communication (100) selon la revendication 1, **caractérisé en ce que** le réseau de communication (100) est disposé pour intégrer les messages d'identification de ligne d'appelant et les messages de synchronisation dans des messages uniques, utilisant une représentation hexadécimale pour les informations d'identification de ligne d'appelant tout en mettant des informations de temps dans des positions, qui sont devenues vides par l'utilisation de la représentation hexadécimale.

6. Station d'utilisateur (1) à coupler à un réseau de communication (100), comprenant un récepteur (4) pour recevoir des messages du type spécifié de format de données comprenant des informations d'identification de ligne d'appelant d'une ligne d'appelant, envoyées par le réseau de communication (100) et comprenant en outre une horloge (13), **caractérisé en ce que** la station d'utilisateur (1) comprend en outre un moyen de synchronisation (14) pour synchroniser l'horloge (13) en fonction des messages de synchronisation dans le type spécifié de format de données envoyé par le réseau de communication (100), comprenant des informations de temps et pas d'informations d'identification de ligne d'appelant.

7. Station d'utilisateur (1) selon la revendication 6, **caractérisée en ce que** la station d'utilisateur (1) est disposée pour demander automatique de recevoir un message de synchronisation à partir du réseau de communication (100), lorsqu'il est connecté à celui-ci pour la première fois, le message de synchronisation étant utilisé comme valeur de départ pour l'horloge (13).
